# EUROPEAN PATENT APPLICATION

(11) **EP 4 675 159 A1**
(43) Date of publication of application: **07.01.2026**
(21) Application number: 25159814.0
(22) Date of filing: 25.02.2025
(51) Int. Cl.: F21S 43/14, F21S 43/50, F21W 104/00, B60Q 1/00, F21S 43/20

(54) **LIGHTING DEVICE FOR VEHICLE**

(30) Priority: 04.07.2024 KR 20240088195
(71) Applicant: Hyundai Mobis Co., Ltd., Gangnam-gu Seoul 06141 (KR)
(72) Inventor: KIM, Min Ji, 16891 Yongin-si, Gyeonggi-do (KR); KIM, Do Hyung, 16891 Yongin-si, Gyeonggi-do (KR); KIM, Phil Su, 16891 Yongin-si, Gyeonggi-do (KR)
(74) Representative: Jung, Minkyu

(57) **Abstract**

A lighting device for a vehicle includes a housing portion (100) having an opening (100a); a lens portion (200) coupled to the housing portion (100) and configured to cover the opening (100a) of the housing portion (100); a light source portion (300) housed at the housing portion (100) and configured to emit light toward the lens portion (200); a first layer portion (410) disposed on the lens portion (200) and configured to allow the light emitted from the light source portion (300) to pass through; and a second layer portion (500) positioned between the light source portion (300) and the lens portion (200) and including a pattern portion (510) having a light transmittance different from that of the first layer portion (410).

## Description

### BACKGROUND

### FIELD

Exemplary embodiments of the present disclosure relate to a lighting device for a vehicle and, more particularly, to a lighting device for a vehicle capable of realizing grille lighting.

### DESCRIPTION OF THE RELATED ART

In recent years, vehicle manufacturers have been attempting to fill the reduced visual density of front surfaces of electric vehicles by creating differentiated lighting images, making an effort to add new value through unexpected effects in the space where the grille of electric vehicles has disappeared, and investing heavily in 3D stereoscopic grille lighting for eye-catching visual effects.

Conventionally, there have been limitations in grille lighting content and technological implementation solutions that effectively express brand identity. As the lighting area expands to include the grille portion, various issues have arisen, including increased development and production costs, as well as weight gain due to the use of multiple lighting devices. Therefore, these issues require improvement.

The related art of the present disclosure is disclosed in Korean Patent Application Publication No. 10-2023-0077201 (published on June 1, 2023 and entitled "The lighting grill for the electric vehicle").

### SUMMARY

Exemplary embodiments of the present disclosure relate to a lighting device for a vehicle capable of providing a three-dimensional image to drivers, nearby vehicles, and pedestrians by realizing grille lighting.

A lighting device for a vehicle according to the present disclosure includes a housing portion having an opening; a lens portion coupled to the housing portion and configured to cover the opening of the housing portion; a light source portion housed at the housing portion and configured to emit light toward the lens portion; a first layer portion disposed on the lens portion and configured to allow the light emitted from the light source portion to pass through; and a second layer portion positioned between the light source portion and the lens portion and including a pattern portion having a light transmittance different from that of the first layer portion.

The first layer portion may have a same color as a vehicle body of the vehicle.

The lens portion may have a first surface and a second surface, and the first layer portion may be disposed on the second surface of the lens portion, positioned to face either in a direction toward the first surface of the lens portion or in a second direction opposite to the first direction.

The first layer portion may include a film attached to the lens portion.

The first layer portion may include a coating layer applied to the lens portion.

The pattern portion may include a first pattern portion configured to allow the light emitted from the light source portion to pass through; and a second pattern portion having a light transmittance lower than that of the first pattern portion.

The second pattern portion may include a gradient pattern.

The pattern portion may further include a third pattern portion formed with stripes, arranged across the first pattern portion and the second pattern portion, and having a light transmittance lower than that of the first pattern portion.

The lighting device for a vehicle may further include a third layer portion coated on the lens portion and covering the lens portion.

The lighting device for a vehicle may further include a grille portion disposed on a front portion of a vehicle body, wherein the housing portion is mounted to the grille portion.

In the lighting device for a vehicle, when the light source portion is turned off, the pattern portion of the second layer portion is invisible from the outside of the vehicle, and the first layer portion, having the same color as the vehicle body, is visible from the outside of the vehicle.

In the lighting device for a vehicle, when the light source portion is turned on, the second layer portion, having a pattern realized through the degree of shielding, becomes visible in front of the transmissive first layer portion, thereby realizing natural and three-dimensional grille lighting.

The lighting device for a vehicle may achieve market differentiation by providing images both when turned on and when turned off.

### BRIEF DESCRIPTION OF THE DRAWINGS

FIG. 1 is a front view showing a vehicle equipped with a lighting device for a vehicle according to an embodiment of the present disclosure.
FIG. 2 is a sectional view schematically showing the lighting device for a vehicle according to a first embodiment of the present disclosure.
FIG. 3 is an exploded perspective view schematically showing the lighting device for a vehicle according to the first embodiment of the present disclosure.
FIG. 4 is a plan view showing a second layer portion in the lighting device for a vehicle according to the first embodiment of the present disclosure.
FIG. 5 is a sectional view schematically showing the lighting device for a vehicle according to a second embodiment of the present disclosure.
FIG. 6 is an exploded perspective view schematically showing the lighting device for a vehicle according to the second embodiment of the present disclosure.
FIG. 7 is a plan view showing a second layer portion in the lighting device for a vehicle according to the second embodiment of the present disclosure.
FIG. 8 is a front view of the lighting device for a vehicle according to the embodiment of the present disclosure, viewed from the front of a vehicle body in a state in which a light source portion is turned off.
FIG. 9 is a front view of the lighting device for a vehicle according to the embodiment of the present disclosure, viewed from the front of the vehicle body in a state in which the light source portion is turned on.

### DETAILED DESCRIPTION

Embodiments of a lighting device for a vehicle according to the present disclosure will be described hereinafter with reference to the accompanying drawings. In this process, the thickness of lines and the size of elements illustrated in the drawing may be exaggerated for clarity and convenience of description. In addition, the terms used below are defined in consideration of the functions thereof in the present disclosure and may vary depending on the intention of a user or an operator or common practice. Therefore, these terms should be contextually defined in light of the present specification.

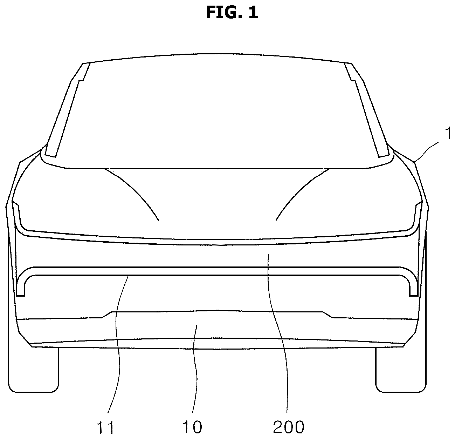

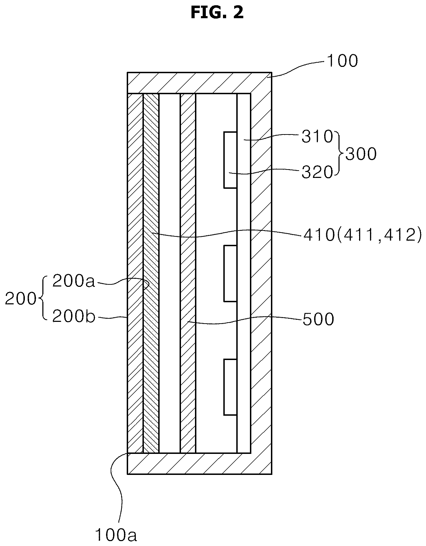

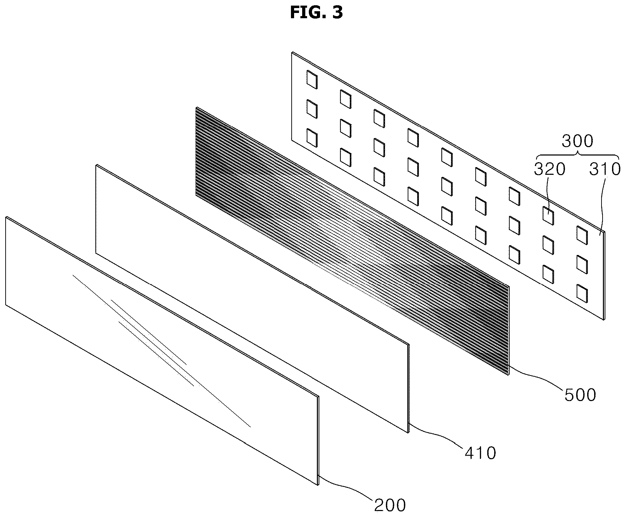

FIG. 1 is a front view showing a vehicle equipped with a lighting device for a vehicle according to an embodiment of the present disclosure. FIG. 2 is a sectional view schematically showing the lighting device for a vehicle according to a first embodiment of the present disclosure. FIG. 3 is an exploded perspective view schematically showing the lighting device for a vehicle according to the first embodiment of the present disclosure.

Referring to FIGS. 1 to 3, a lighting device for a vehicle according to a first embodiment of the present disclosure includes a housing portion 100, a lens portion 200, a light source portion 300, a first layer portion 410, and a second layer portion 500, which will be described in detail as follows.

The housing portion 100 may be mounted to a vehicle body 1. The housing portion 100 may be mounted on a front portion 10 of the vehicle body 1, which faces the front of the vehicle.

The housing portion 100 may be mounted to a grille portion 11 disposed (or provided) on the front portion 10 of the vehicle body 1. In this case, the grille portion 11 may refer to a part of the front portion 10 of the vehicle body 1 where a radiator grille is mounted. In another embodiment, the housing portion 100 may be mounted on the front bumper or hood side where a headlamp is mounted. The housing portion 100 may be positioned in the width direction of the vehicle body 1.

The housing portion 100 may have a box shape and be formed with an open front surface facing the front of the vehicle body 1.

The lens portion 200 may be coupled to the housing portion 100. The lens portion 200 may have a substantially plate-like shape and the edges thereof may be secured to the edges of the housing portion 100. The lens portion 200 may have a planar or curved shape to match a shape of an opening 100a provided in the housing portion 100. The lens portion 200 may cover the opening 100a disposed or provided on the front surface of the housing portion 100, which faces the front of the vehicle body 1.

The lens portion 200 according to the first embodiment of the present disclosure may be exposed to the outside and be made of a transparent material that transmits light. For example, the lens portion 200 may include plastics such as polycarbonate. Such polycarbonate is known as a material that offers high strength due to rigid physical properties thereof, while providing outstanding formability, transparency, and superior durability. In another embodiment, the lens portion 200 may include a translucent material.

The light source portion 300 may be housed at or installed in the housing portion 100. The light source portion 300 may be housed inside the housing portion 100. The light source portion 300 may be spaced apart from the lens portion 200 and positioned to face the lens portion 200.

The light source portion 300 may include a substrate 310 secured to an inner surface of the housing portion 100 and include a light emitting diode (LED) 320 mounted on the substrate 310. The substrate 310 may be exemplified as a printed circuit board (PCB). A plurality of LEDs 320 may be spaced apart along the length direction of the substrate 310, which is parallel to the width direction of the vehicle body 1.

The light source portion 300 may emit light toward the lens portion 200. In detail, the light source portion 300 may emit light in a direction where the lens portion 200 is positioned.

The first layer portion 410 may be disposed or provided on the lens portion 200. The first layer portion 410 may include a transmissive material that allows light emitted from the light source portion 300 to pass therethrough. The first layer portion 410 may have the same color as the vehicle body 1.

The first layer portion 410 according to the first embodiment of the present disclosure may be disposed or provided on a first surface 200a of the lens portion 200. In this case, the first surface 200a may refer to an inner surface of the lens portion 200, which faces in a direction where the light source portion 300 is positioned. A second surface 200b of the lens portion 200 may refer to an outer surface of the lens portion 200 positioned to face in a direction opposite to the first surface 200a. The first layer portion 410 according to the present embodiment may be positioned between the lens portion 200 and the light source portion 300.

The first layer portion 410 may include a film 411 attached to the first surface 200a of the lens portion 200. The film 411 may be attached to the lens portion 200 through an autoclave process. The film 411 may have the same color as the vehicle body 1. In another embodiment, the first layer portion 410 may include a coating layer 412 applied to the first surface 200a of the lens portion 200. The coating layer 412 may have the same color as the vehicle body 1.

The first layer portion 410 may be visible from the outside. For example, when the light source portion 300 is turned off under daytime conditions, the first layer portion 410 may be visible from the outside of the vehicle through the lens portion 200.

The second layer portion 500 may be positioned between the light source portion 300 and the lens portion 200. The second layer portion 500 may include a transmissive material that allows light emitted from the light source portion 300 to pass therethrough. The second layer portion 500 may be formed as a thin film or lens.

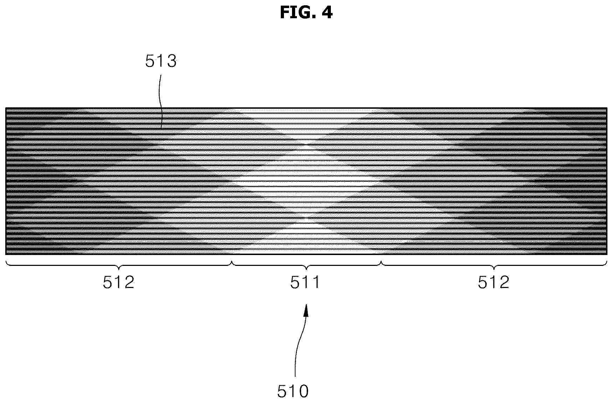

FIG. 4 is a plan view showing a second layer portion in the lighting device for a vehicle according to the first embodiment of the present disclosure.

Referring to FIGS. 1 to 4, the second layer portion 500 may include a pattern portion 510 having a light transmittance different from that of the first layer portion 410. The pattern portion 510 may include a plurality of rhombus-shaped unit patterns with sharp corners and shared edges, arranged along the width and length directions of the second layer portion 500.

The pattern portion 510 may be visible from the outside. For example, when the light source portion 300 is turned on under nighttime conditions, the pattern portion 510 may be visible from the outside of the vehicle through the lens portion 200. Conversely, when the light source portion 300 is turned off under daytime conditions, the pattern portion 510 is shielded by the color included in the first layer portion 410 and becomes invisible from the outside of the vehicle.

The pattern portion 510 may include a first pattern portion 511 and a second pattern portion 512.

The first pattern portion 511 is positioned in a central portion of the second layer portion 500, and all light emitted from the light source portion 300 may pass therethrough. In detail, the light transmittance of the first pattern portion 511 may be approximately 99% or more.

The second pattern portion 512 may be arranged on both sides of the first pattern portion 511. In detail, the second pattern portion 512 may be provided on each side along the length direction of the second layer portion 500.

The second pattern portion 512 may be configured to have lower light transmittance than the first pattern portion 511. The second pattern portion 512 may include a dye or pigment having a set color. The second pattern portion 512 may be disposed or configured to have lower transparency than the first pattern portion 511.

The second pattern portion 512 may include a gradient pattern. The second pattern portion 512 may include a gradient pattern that becomes gradually less transparent toward both ends of the second layer portion 500. As the transparency of the second pattern portion 512 gradually decreases toward both ends of the second layer portion 500, the light transmittance of the second pattern portion 512 may also decrease toward both ends of the second layer portion 500.

The pattern portion 510 according to the first embodiment of the present disclosure may further include a third pattern portion 513.

The third pattern portion 513 may be formed with stripes, arranged across the first pattern portion 511 and the second pattern portion 512. In detail, the third pattern portion 513 may be arranged along the length direction of the second layer portion 500.

The third pattern portion 513 may be configured to have lower light transmittance than the first pattern portion 511. The third pattern portion 513 may be configured to have lower transparency than the first pattern portion 511. A lineshaped third pattern portion 513, having lower light transmittance than the first pattern portion 511, is arranged across the first pattern portion 511 and the second pattern portion 512, thereby enabling a more refined grille lighting image to be realized.

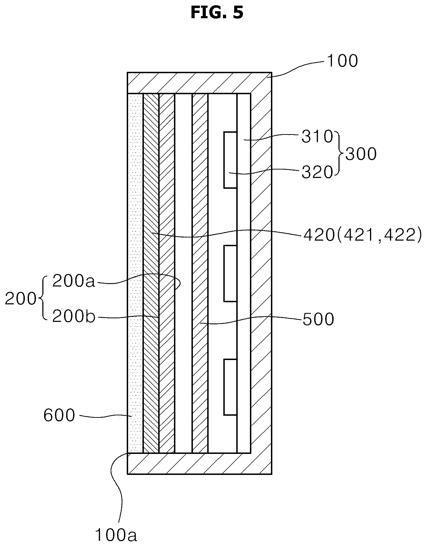

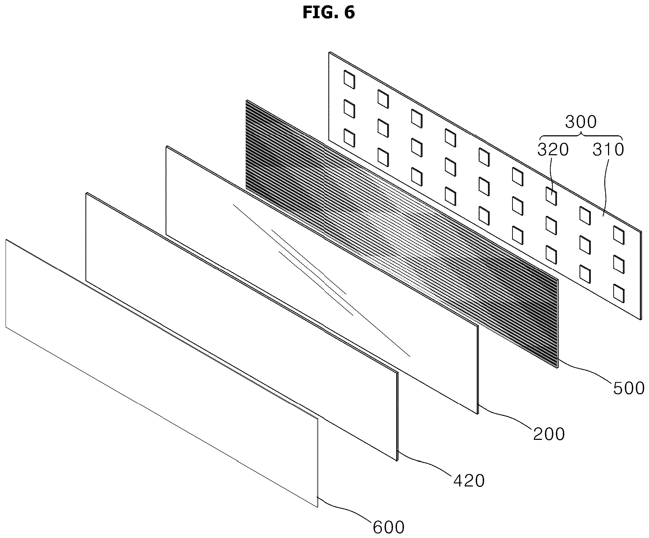

FIG. 5 is a sectional view schematically showing the lighting device for a vehicle according to a second embodiment of the present disclosure. FIG. 6 is an exploded perspective view schematically showing the lighting device for a vehicle according to the second embodiment of the present disclosure.

Referring to FIGS. 1, 5 and 6, a lighting device for a vehicle according to a second embodiment of the present disclosure includes a housing portion 100, a lens portion 200, a light source portion 300, a first layer portion 420, and a second layer portion 500.

The housing portion 100 may be mounted to a vehicle body 1. The housing portion 100 may be mounted on a front portion 10 of the vehicle body 1, which faces the front of the vehicle.

The housing portion 100 may be mounted to a grille portion 11 disposed or provided on the front portion 10 of the vehicle body 1. In this case, the grille portion 11 may refer to a part of the front portion 10 of the vehicle body 1 where a radiator grille is mounted. In another embodiment, the housing portion 100 may be mounted on the front bumper or hood side where a headlamp is mounted. The housing portion 100 may be positioned in the width direction of the vehicle body 1.

The housing portion 100 may have a box shape and be formed with an open front surface facing the front of the vehicle body 1.

The lens portion 200 may be coupled to the housing portion 100. The lens portion 200 may have a substantially plate-like shape and the edges thereof may be secured to the edges of the housing portion 100. The lens portion 200 may have a planar or curved shape to match a shape of an opening 100a provided in the housing portion 100. The lens portion 200 may cover the opening 100a disposed or provided on the front surface of the housing portion 100, which faces the front of the vehicle body 1.

The lens portion 200 according to the second embodiment of the present disclosure may be made of a transparent material that transmits light. The lens portion 200 may be made of an elastically deformable material. For example, the lens portion 200 may include synthetic resin such as polypropylene. Such polypropylene is known to be lightweight and to exhibit outstanding mechanical properties and formability. In another embodiment, the lens portion 200 may include a translucent material.

The light source portion 300 may be installed in the housing portion 100. The light source portion 300 may be housed inside the housing portion 100. The light source portion 300 may be spaced apart from the lens portion 200 and positioned to face the lens portion 200.

The light source portion 300 may include a substrate 310 secured to an inner surface of the housing portion 100 and include a light emitting diode (LED) 320 mounted on the substrate 310. The substrate 310 may be exemplified as a printed circuit board (PCB). A plurality of LEDs 320 may be spaced apart along the length direction of the substrate 310, which is parallel to the width direction of the vehicle body 1.

The light source portion 300 may emit light toward the lens portion 200. In detail, the light source portion 300 may emit light in a direction where the lens portion 200 is positioned.

The first layer portion 420 may be disposed or provided on the lens portion 200. The first layer portion 420 may include a transmissive material that allows light emitted from the light source portion 300 to pass therethrough. The first layer portion 420 may have the same color as the vehicle body 1.

The first layer portion 420 according to the second embodiment of the present disclosure may be disposed or provided on a second surface 200b of the lens portion 200. The first layer portion 420 may be disposed or provided on an outer surface of the lens portion 200, positioned to face in a direction opposite to the first surface 200a of the lens portion 200 that faces the light source portion 300.

The first layer portion 420 may include a film 421 attached to the second surface 200b of the lens portion 200. The film 421 may be attached to the lens portion 200 through an autoclave process. The film 421 may have the same color as the vehicle body 1. In another embodiment, the first layer portion 410 may include a coating layer 422 applied to the second surface 200b of the lens portion 200. The coating layer 422 may have the same color as the vehicle body 1.

The first layer portion 420 may be visible from the outside. For example, when the light source portion 300 is turned off under daytime conditions, the first layer portion 420 may be visible from the outside of the vehicle through the lens portion 200.

The second layer portion 500 may be positioned between the light source portion 300 and the lens portion 200. The second layer portion 500 may include a transmissive material that allows light emitted from the light source portion 300 to pass therethrough. The second layer portion 500 may be formed as a thin film or lens.

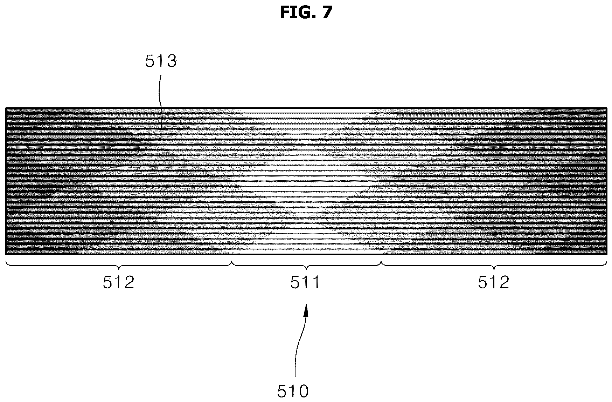

FIG. 7 is a plan view showing a second layer portion in the lighting device for a vehicle according to the second embodiment of the present disclosure.

Referring to FIGS. 1, 5 to 7, the second layer portion 500 may include a pattern portion 510 having different light transmittance. The pattern portion 510 may include a plurality of rhombus-shaped unit patterns with sharp corners and shared edges, arranged along the width and length directions of the second layer portion 500.

The pattern portion 510 may be visible from the outside. For example, when the light source portion 300 is turned on under nighttime conditions, the pattern portion 510 may be visible from the outside of the vehicle through the lens portion 200. Conversely, when the light source portion 300 is turned off under daytime conditions, the pattern portion 510 is shielded by the color included in the first layer portion 420 and becomes invisible from the outside of the vehicle.

The pattern portion 510 may include a first pattern portion 511 and a second pattern portion 512.

The first pattern portion 511 is positioned in a central portion of the second layer portion 500, and all light emitted from the light source portion 300 may pass therethrough. In detail, the light transmittance of the first pattern portion 511 may be approximately 99% or more.

The second pattern portion 512 may be arranged on both sides of the first pattern portion 511. In detail, the second pattern portion 512 may be disposed or provided on each side along the length direction of the second layer portion 500.

The second pattern portion 512 may be configured to have lower light transmittance than the first pattern portion 511. The second pattern portion 512 may include a dye or pigment having a set color. The second pattern portion 512 may be configured to have lower transparency than the first pattern portion 511.

The second pattern portion 512 may include a gradient pattern. The second pattern portion 512 may include a gradient pattern that becomes gradually less transparent toward both ends of the second layer portion 500. As the transparency of the second pattern portion 512 gradually decreases toward both ends of the second layer portion 500, the light transmittance of the second pattern portion 512 may also decrease toward both ends of the second layer portion 500.

The pattern portion 510 according to the second embodiment of the present disclosure may further include a third pattern portion 513.

The third pattern portion 513 may be formed with stripes, arranged across the first pattern portion 511 and the second pattern portion 512. In detail, the third pattern portion 513 may be arranged along the length direction of the second layer portion 500.

The third pattern portion 513 may be configured to have lower light transmittance than the first pattern portion 511. The third pattern portion 513 may be configured to have lower transparency than the first pattern portion 511. A lineshaped third pattern portion 513, having lower light transmittance than the first pattern portion 511, is arranged across the first pattern portion 511 and the second pattern portion 512, thereby enabling a more refined grille lighting image to be realized.

The lighting device for a vehicle according to the second embodiment of the present disclosure may further include a third layer portion 600.

The third layer portion 600 may be coated on the lens portion 200 to cover the lens portion 200. The third layer portion 600 may be disposed or provided on the second surface 200b of the lens portion 200. The third layer portion 600 may include polyurethane. The third layer portion 600 may be coated on the second surface 200b of the lens portion 200 to protect the second surface 200b of the lens portion 200, where the first layer portion 420 is provided, from external contamination.

Based on the configuration described above, the operation of the lighting device for a vehicle according to the embodiment of the present disclosure will be described as follows.

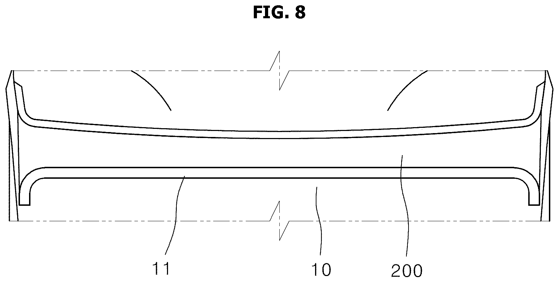

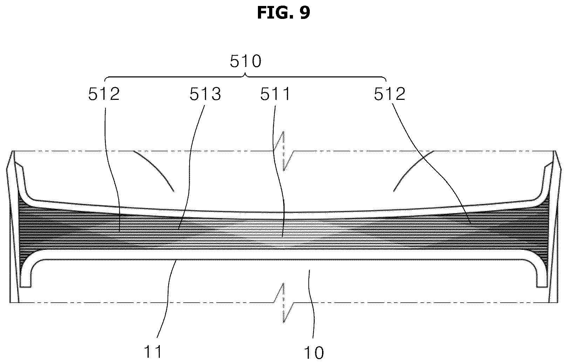

FIG. 8 is a front view of the lighting device for a vehicle according to the embodiment of the present disclosure, viewed from the front of a vehicle body in a state in which a light source portion is turned off. FIG. 9 is a front view of the lighting device for a vehicle according to the embodiment of the present disclosure, viewed from the front of the vehicle body in a state in which the light source portion is turned on.

Referring to FIG. 8, when the light source portion 300 is turned off under daytime conditions, the second layer portion 500 may be invisible from the outside of the vehicle through the lens portion 200. In detail, the pattern portion 510, disposed or provided on the second layer portion 500, is shielded by the color included in the first layer portions 410 and 420 and becomes invisible from the outside of the vehicle through the lens portion 200.

However, when the first layer portions 410 and 420 may be visible from the outside of the vehicle through the lens portion 200. In detail, when the light source portion 300 is turned off under daytime conditions, the color included in the first layer portions 410 and 420 may be visible from the outside of the vehicle through the lens portion 200.

Referring to FIG. 9, when the light source portion 300 is turned on under nighttime conditions, the first layer portions 410 and 420 may be visible from the outside of the vehicle through the lens portion 200, and the second layer portion 500 may also be visible from the outside of the vehicle through the lens portion 200. In detail, when the light source portion 300 is turned on under nighttime conditions, the color included in the first layer portions 410 and 420 may be visible from the outside of the vehicle through the lens portion 200, and the pattern portion 510, disposed or provided on the second layer portion 500, may also be visible from the outside of the vehicle through the lens portion 200.

In the lighting device for a vehicle according to the embodiment of the present disclosure, when the light source portion 300 is turned off, the pattern portion 510 of the second layer portion 500 may be invisible from the outside of the vehicle, and the first layer portions 410 and 420, which have the same color as the vehicle body, may be visible from the outside of the vehicle.

In the lighting device for a vehicle according to the embodiment of the present disclosure, when the light source portion 300 is turned on, the second layer portion 500, having a pattern realized through the degree of shielding, becomes visible in front of the transmissive first layer portions 410 and 420, thereby realizing natural and three-dimensional grille lighting.

The lighting device for a vehicle according to the embodiment of the present disclosure may achieve market differentiation by providing images both when turned on and when turned off.

Although embodiments of the present disclosure have been described with reference to the accompanying drawings, these embodiments are merely exemplary, and those skilled in the art will appreciate that various modifications and other equivalent embodiments can be made from these embodiments disclosed herein. Thus, the true technical scope of the disclosure should be defined by the following claims.

## Claims

1. A lighting device for a vehicle comprising:
a housing portion having an opening;
a lens portion coupled to the housing portion and configured to cover the opening of the housing portion;
a light source portion housed at the housing portion and configured to emit light toward the lens portion;
a first layer portion disposed on the lens portion and configured to allow the light emitted from the light source portion to pass through; and
a second layer portion positioned between the light source portion and the lens portion and including a pattern portion having a light transmittance different from that of the first layer portion.

2. The lighting device for the vehicle of claim 1, wherein the first layer portion has a same color as a vehicle body of the vehicle.

3. The lighting device for the vehicle of claim 1 or 2, wherein:
the lens portion has a first surface and a second surface, and
the first layer portion is disposed on the second surface of the lens portion, positioned to face either in a direction toward the first surface of the lens portion or in a second direction opposite to the first direction.

4. The lighting device for the vehicle of any one of claims 1 to 3, wherein the first layer portion comprises a film attached to the lens portion.

5. The lighting device for the vehicle of any one of claims 1 to 3, wherein the first layer portion comprises a coating layer applied to the lens portion.

6. The lighting device for the vehicle of any one of claims 1 to 5, wherein the pattern portion comprises:
a first pattern portion configured to allow the light emitted from the light source portion to pass through; and
a second pattern portion having a light transmittance lower than that of the first pattern portion.

7. The lighting device for the vehicle of claim 6, wherein the second pattern portion includes a gradient pattern.

8. The lighting device for the vehicle of any one of claims 1 to 7, wherein the pattern portion further comprises a third pattern portion formed with stripes, arranged across the first pattern portion and the second pattern portion, and having a light transmittance lower than that of the first pattern portion.

9. The lighting device for the vehicle of any one of claims 1 to 8, further comprising a third layer portion coated on the lens portion and covering the lens portion.

10. The lighting device for the vehicle of any one of claims 1 to 9, further comprising a grille portion disposed on a front portion of a vehicle body, wherein the housing portion is mounted to the grille portion.
